# EUROPÄISCHE PATENTSCHRIFT

(11) **EP 2 155 360 B1**
(45) Veröffentlichungstag und Bekanntmachung des Hinweises auf die Patenterteilung: **07.08.2013**
(21) Anmeldenummer: 08758147.6
(22) Anmeldetag: 30.05.2008
(51) Int. Cl.: B01D 53/22

(54) **VORRICHTUNG UND VERFAHREN ZUR REDUZIERUNG VON CO2-EMISSIONEN AUS DEN ABGASEN VON FEUERUNGSANLAGEN**
DEVICE AND METHOD FOR REDUCING CO2-EMISSIONS FROM THE WASTE GASES OF COMBUSTION PLANTS
DISPOSITIF ET PROCÉDÉ DESTINÉS À RÉDUIRE LES ÉMISSIONS DE CO2 ISSUES DES GAZ D'ÉCHAPPEMENT D'INSTALLATION DE CHAUFFAGE

(30) Priorität: 11.06.2007 DE 102007027388
(43) Veröffentlichungstag der Anmeldung: 24.02.2010
(73) Patentinhaber: Forschungszentrum Jülich GmbH, 52425 Jülich (DE)
(72) Erfinder: NAZARKO, Jewgeni, 52353 Düren (DE); RIENSCHE, Ernst, 52428 Jülich (DE); BLUM, Ludger, 52428 Jülich (DE); MENZER, Reinhard, 52152 Simmerath (DE); MEULENBERG, Wilhelm, Albert, NL-6294 AA Vijlen (NL); BRAM, Martin, 52428 Jülich (DE)
(74) Vertreter: Hoppe, Karin
(86) Internationale Anmeldenummer: PCT/DE2008/000907
(87) Internationale Veröffentlichungsnummer: WO 2008/151599

(56) Entgegenhaltungen:
- WO-A-2006/113674
- JP-A- 3 267 110
- JP-A- 4 066 107
- JP-A- 6 099 035
- US-A- 5 411 581

## Beschreibung

Die Erfindung betrifft Verfahren zur Reduzierung von CO₂-Emissionen aus den Abgasen von Feuerungsanlagen, insbesondere aus Rauchgasen von Energieumwandlungsanlagen, mit Hilfe von Membranen. Ferner betrifft die Erfindung die für die Durchführung dieser Verfahren geeigneten Vorrichtungen.

### Stand der Technik

Eine der bedeutendsten Quellen für die Zunahme der Kohlendioxidkonzentration in der Atmosphäre ist die Verbrennung fossiler Energieträger in Feuerungsanlagen mit dem Ziel der Energieerzeugung. Daher soll versucht werden, CO₂ aus der Verbrennung fossiler Energieträger abzutrennen und danach einzulagern, um es nicht in die Atmosphäre freizusetzen. Grund für diese Bemühungen sind der Treibhauseffekt und die daraus resultierende globale Erwärmung.

Aus einer Vielzahl von denkbaren Verfahren wird derzeit an drei prinzipiellen Konzepten der Abscheidung von Kohlendioxid gearbeitet, die sich in der Positionierung der Abtrennung im Bezug auf den Energieumwandlungsprozess unterscheiden. Dies sind die CO₂-Abtrennung nach der Energieumwandlung, die CO₂-Abtrennung vor der Energieumwandlung und die Erzeugung eines CO₂-reichen Rauchgases durch die Energieumwandlung in einer angereicherten Sauerstoffatmosphäre.

Das Konzept der CO₂-Abtrennung nach der Energieumwandlung weist dabei als End-of-pipe Problemlösung die Vorteile auf, dass die CO₂-Abtrennung selbst nur einen geringen Einfluss auf die Verfügbarkeit der Energieumwandlungsanlage aufweist [10], und die Möglichkeit, bestehende Anlagen nachzurüsten.

Aufgrund der höheren CO₂-Konzentration im Rauchgas und komplexeren nachgeschalteten Rauchgasreinigung wird der Stand der Technik am Beispiel eines Steinkohledampfkraftwerkes beschrieben.

In den dem Stand der Technik entsprechenden Steinkohlekraftwerken verlässt das Rauchgas nach der Entstickung / Entstaubung und Entschwefelung das Kraftwerk. Dadurch gelangt das CO₂, welches abhängig von dem jeweiligen Kraftwerk, Brennstoff und/oder Feuerungsbedingungen einen Anteil von max. 15 Vol.-% ausmacht, in die Atmosphäre. Zur Abtrennung des CO₂ ist vorgesehen, nach der ggf. angepassten Entschwefelung, welche vom SO₂-Gehalts des Rauchgases abhängen kann [1, 3, 8], Rauchgas durch einen Waschturm zu leiten. Dort wird das CO₂ z. B. durch fein verteilte aminbasierte Waschlösung absorbiert. In einem zweiten Schritt kann die Waschlösung in einen Abscheider (Stripper) durch Erhitzung regeneriert werden, so dass das CO₂ wieder in konzentrierter Form frei wird, welches dann eingelagert werden kann. Die CO₂-arme Waschlösung kann dann erneut zur Absorption verwendet werden [2].

Nachteilig wäre hierbei jedoch
- die Reduzierung des Nettowirkungsgrades des Kraftwerkes durch die Anzapfung des Niederdruckdampfes für die Regeneration der Waschlösung und durch den Betrieb der elektrischen Einrichtungen der Waschanlage [1,6, 7, 8];
- der Verbrauch der Waschlösung aufgrund von irreversiblen Reaktionen der Komponenten der Waschlösung mit den Bestandteilen des Rauchgases sowie der Degradation und der Verdunstung der Waschlösung [1, 3, 5, 8];
- die Freisetzung der ggf. veränderten Komponenten der Waschlösung in die Atmosphäre und die aufwendige Beseitigung von zusätzlichen besonders überwachungsbedürftigen Abfällen aus der Aufarbeitung der Waschlösung sowie der Zersetzungs- bzw. Reaktionsprodukte [1, 6].

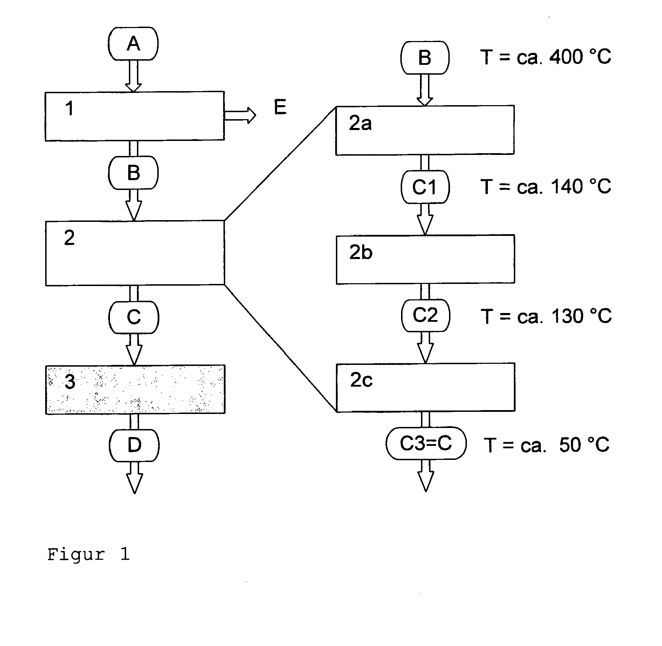

Ferner sind zur Abtrennung von CO₂ aus Rauchgasen diverse Gastrennverfahren, z. B. mit Membranen mit einem Porendurchmesser von weniger als 1 µm bekannt [4]. Bei diesem Verfahren wird davon ausgegangen, dass die CO₂-Abtrennung nach der Rauchgasreinigung durchgeführt wird, analog zur vorgenannten CO₂-Abtrennung mittels chemischer Absorption (Figur 1).

Dabei ist die Rauchgasentschwefelung ein wichtiger Bestandteil der Rauchgasreinigung. Das derzeit dominierende Rauchgasentschwefelungsverfahren bei den mit festen Brennstoffen befeuerten Großfeuerungsanlagen ist die Entschwefelung durch Kalkwaschverfahren mit Kalkstein (CaCO₃) unter gleichzeitiger Erzeugung von Gips (CaSO₄•2H₂O) [9]. Infolge des nassen Waschverfahrens ist das Rauchgas am Austritt aus der Rauchgasentschwefelungsanlage mit einer Temperatur von ca. 40 - 70 °C mit Wasserdampf nahezu gesättigt. Das Temperaturniveau hängt dabei von den Kraftwerksparametern ab. Für die weitere Betrachtung wird die Temperatur des Rauchgases nach der Entschwefelung als mit 50 °C angenommen. Bei der Anordnung der Rauchgas-Entcarbonisierung mittels einer Membran nach der nassen Rauchgasentschwefelung werden die Poren der Membran je nach Membranwerkstoff aufgrund der Unterschreitung der Taulinie des Wasserdampfes durch auskondensierendes Wasser nachteilig blockiert.

Ein Verfahren gemäβ dem Oberbegriff von Anspruch 1 ergibt sich aus [11].

### Aufgabe und Lösung

Aufgabe der Erfindung ist es, ein Verfahren zur Verfügung zu stellen, welches auf einfache und kostengünstige Art und Weise eine Reduzierung von CO₂-Emissionen aus den Abgasen von Feuerungsanlagen ermöglicht.

Ferner ist es die Aufgabe der Erfindung, eine geeignete Vorrichtung zur Durchführung des vorgenannten Verfahrens bereit zu stellen.

Die Aufgaben der Erfindung werden gelöst durch ein Verfahren gemäß Anspruch 1 sowie durch eine Vorrichtung mit der Gesamtheit der Merkmale des Anspruch 4 . Vorteilhafte Ausführungsformen sind den jeweils darauf rückbezogenen Unteransprüchen zu entnehmen.

### Gegenstand der Erfindung

Die Erfindung betrifft ein Verfahren zur Reduzierung von CO₂-Emissionen aus den Abgasen von Feuerungsanlagen, insbesondere aus Rauchgasen von Energieumwandlungsanlagen, mit Hilfe von Membranen. Ferner betrifft die Erfindung die für die Durchführung dieser Verfahren geeigneten Vorrichtungen.

Im Folgenden wird unter Feuerungsanlage jede Anlage verstanden, in der ein gasförmiger, flüssiger und/oder fester Brennstoff unabhängig von dessen Ursprung zur Nutzung der erzeugten Wärme oxidiert wird inklusive partielle Oxidation, einschließlich Verbrennungsanlagen zur Behandlung von Abfällen und Mitverbrennungsanlagen sowie Anlagen der elektrochemischen Oxidation (z. B. Brennstoffzelle). Dazu zählen beispielsweise Gasbrenner, die mit Erdgas, Flüssiggas, Stadtgas oder Deponiegas betrieben werden, Ölbrenner, die z. B. mit Erdöl, Heizöl, oder auch Alkoholen betrieben werden, und auch Rostfeuerungen für stückige Brennstoffe, wie beispielsweise gasreiche Steinkohle oder Holzhackschnitzel, Wirbelschichtfeuerungen oder Staubfeuerungen. Diese Definition erstreckt sich auf alle dazugehörigen Vorrichtungen und Systeme einer Feuerungsanlage. Solche Anlagen umfassen sowohl ortsfeste, als auch ortveränderliche technische Einrichtungen.

Rauchgas nennt man das Trägergas mit den festen, flüssigen und/oder gasförmigen Luftverunreinigungen. Zu Luftverunreinigungen werden Veränderungen der natürlichen Zusammensetzung der Luft gezählt, insbesondere durch Rauch, Asche, Ruß, Staub, Gase, Aerosole, Dämpfe oder Geruchsstoffe.

Die Idee der Erfindung basiert darauf, die Umgebungsparameter des Rauchgases für die Abtrennung des CO₂ (Entcarbonisierungsverfahren) mit Hilfe einer Membran zu optimieren, so dass ein nachteiliges Blockieren der Membranporen durch auskondensiertes Wasser vermieden werden kann. Dazu bieten sich insbesondere drei verschiedene Alternativen an.

In einer ersten Ausgestaltung wird der Prozessschritt der CO₂-Abtrennung (Rauchgas-Entkarbonisierung) vorteilhaft in eine bestehende Rauchgasreinigung, z. B. eines Steinkohledampfkraftwerkes derart integriert, dass er vor der Rauchgasentschwefelung, aber vorteilhaft nach der Entstaubung stattfindet. Dies hat den Vorteil, dass Rauchgas nach der Entstaubung eine Temperatur von ca. 120 - 150 °C aufweist, so dass sich der darin enthaltene Wasserdampf im Zustand über der Taulinie befindet. Damit ist die Gefahr des Auskondensierens von Wasser nicht gegeben, zumal das entstaubte Rauchgas selbst weniger Wasserdampf enthält, als das nach der Entschwefelung. Die Pauschalisierung des Wasserdampfgehaltes des Rauchgases nach der Entstaubung ist nur eingeschränkt möglich, da der Wassergehalt durch den Wassergehalt des eingesetzten Brennstoffes sowie der bisherigen Verfahrensführung beeinflusst wird. Durch die nasse Entschwefelung des Rauchgases mittels des Kalksteinwaschverfahrens werden dem Rauchgasstrom z. B. ca. 15 kg Wasser pro kg reduziertes SO₂ zugeführt [9], so dass die Wasserdampfkonzentration z. B. 10 Vol.-% betragen kann.

Eine nicht erfindungsgemäβe Verfahrensweise sieht vor, die Rauchgas-Entcarbonisierung, ähnlich wie beim Stand der Technik, nach der kompletten Rauchgasreinigung anzuordnen. Im Unterschied dazu wird jedoch zur Verhinderung der Kondensation des Wassers das Rauchgas zunächst derart aufgeheizt, dass die Taulinie des Wasserdampfes deutlich überschritten wird. Das Aufheizen kann vorteilhaft über eine externe Wärmeeinleitung oder einen Wärmetauscher realisiert werden.

Diese Vorgehensweise kann eigenständ realisiert werden oder aber auch in dem Fall, wenn die vorgenannte erfindungsgemäβe Verfahrensweise nicht mehr möglich ist. Das kann zum Beispiel dann erforderlich sein, wenn der Membranwerkstoff bei der Positionierung des Membranmoduls zwischen der Rauchgas-Entstaubung und der Rauchgas-Entschwefelung durch die im entstickten und entstaubten Rauchgas enthaltenen Rest-Stäube und gasförmige Verunreinigungen irreparabel beschädigt wird.

Diese nicht erfindungsgemäβe Verfahrensweise ist besonders einfach zu verwirklichen, da lediglich ein Wärmüberträger bzw. Wärmeaustauscher in die Leitung zwischen den bekannten Prozessschritten Rauchgasentschwefelung und Rauchgas-Entkarbonisierung angeordnet werden muss, die Anordnung der Prozessschritte insgesamt aber unverändert bleiben kann.

In einer weiteren nich erfindungsgemäβen Verfahrensweise, die der ersten ähnelt, wird vorgeschlagen, anstelle einer Temperaturerhöhung eine Druckerhöhung vorzusehen. Das bedeutet auch hier wird die Rauchgas-Entkarbonisierung nach der nassen Rauchgasentschwefelung angeordnet. Allerdings sorgt ein zwischengeschalteter Verdichter dafür, dass das feuchte Rauchgas zunächst verdichtet wird, wobei sich zwangsläufig auch die Temperatur erhöht. Ein weiterer positiver Nebeneffekt dieser Alternative ist, dass sich der CO₂-Partialdruck im gereinigten Rauchgas vorteilhaft erhöht, was sich besonders vorteilhaft auf die sich anschließende CO₂-Abtrennung auswirkt. Die Verdichtung erfolgt mindestens auf solchen Druck, dass der Taupunkt des dadurch aufgewärmten Wasserdampfes überschritten ist.

Unabhängig vor der Verfahrensweise ist es in jedem Fall vorteilhaft, wenn das Membranmodul zur Abtrennung des CO₂ nicht nur einstufig, sondern mehrstufig ausgeführt wird. Durch die Anordnung einer Mehrzahl an möglicherweise auch unterschiedlichen Membrantrennstufen kann einerseits ein möglichst hoher Abtrenngrad und andererseits eine möglichst hohe Reinheit der abgetrennten Komponente, in diesem Fall CO₂, bei einem möglichst geringen Energieaufwand, d. h. einem möglichst hohen Netto-Wirkungsgrad ermöglicht werden.

### Spezieller Beschreibungsteil

Im Folgenden wird die Erfindung anhand von erfindungsgemäβen und nicht erfindungsgemäβen Ausführungsbeispielen näher erläutert, ohne dass dadurch der Schutzbereich eingeschränkt wird. Der zuständige Fachmann kann diese oder weitere analoge Abwandlungen als zur Erfindung zugehörig erkennen.

In den Figuren bedeuten die Ovale die Medien:
A Brennstoff
B Roh-Rauchgas
C gereinigtes Rauchgas, wobei unterschieden wird zwischen:
   C1 entsticktes Rauchgas,
   C2 entsticktes und entstaubtes Rauchgas, und
   C3 entsticktes, entstaubtes und entschwefeltes Rauchgas,
   C4 entsticktes, entstaubtes und entkarbonisiertes Rauchgas,
D Rein-Rauchgas = entsticktes, entstaubtes, entschwefeltes und entkarbonisiertes Rauchgas,
E Elektrizität

Die Rechtecke stehen für die einzelnen Prozessschritte:
1 Elektrizitätserzeugung
2 Rauchgasreinigung, umfassend derzeit
   2a Entstickung,
   2b Entstaubung und'
   2c Entschwefelung
3 CO₂-Abtrennung (Entkarbonisierung) durch Membranmodul
4 Wärmeübertrag
5 Druckerhöhung

Die Figur 1 zeigt das Schema eines Energieumwandlungsprozesses, hier einer Energieerzeugung mit der CO₂-Abtrennung (Entkarbonisierung) nach der Rauchgasreinigung gemäß dem Stand der Technik (linke Seite). Die Rauchgasreinigung einer mit einem festen Brennstoff befeuerten und dem derzeitigen Stand der Technik entsprechenden Großfeuerungsanlage umfasst dabei die Entstickung, die Entstaubung und die Entschwefelung in dieser Reihenfolge (rechte Seite). Die rechte Seite der Figur 1, die den Prozessschritt der Rauchgasreinigung detaillierter darstellt, gibt dabei zudem einen Überblick über das typische Temperaturprofil des Rauchgases zwischen den Prozessen der Rauchgasreinigung.

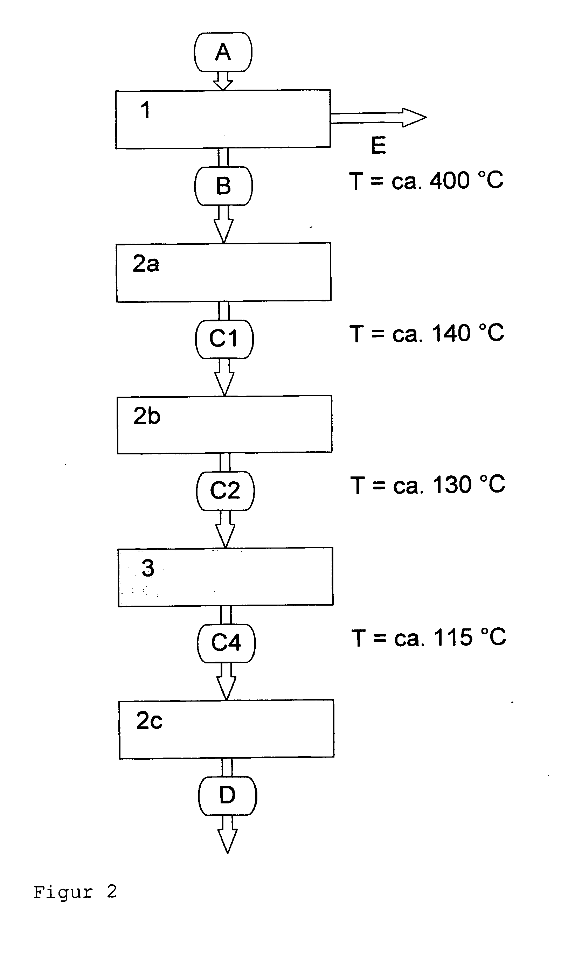

In Figur 2 ist das Schema eines Energieumwandlungsprozesses mit einer integrierten Rauchgas-Entcarbonisierung nach der Rauchgas-Entstaubung dargestellt, welches einer Ausgestaltung der Erfindung entspricht. Dieses Beispiel könnte z. B. für ein Steinkohlekraftwerk geeignet sein. Durch die Positionierung des Membranmoduls der CO₂-Abtrennung (Entkarbonisierung) zwischen Rauchgas-Entstaubung und Rauchgas-Entschwefelung, wo das nahezu drucklose Rauchgas typischerweise eine Temperatur von z. B. ca. 130 °C aufweist, ist das Problem der Wasserkondensation in den Poren der Membran regelmäßig nicht mehr gegeben.

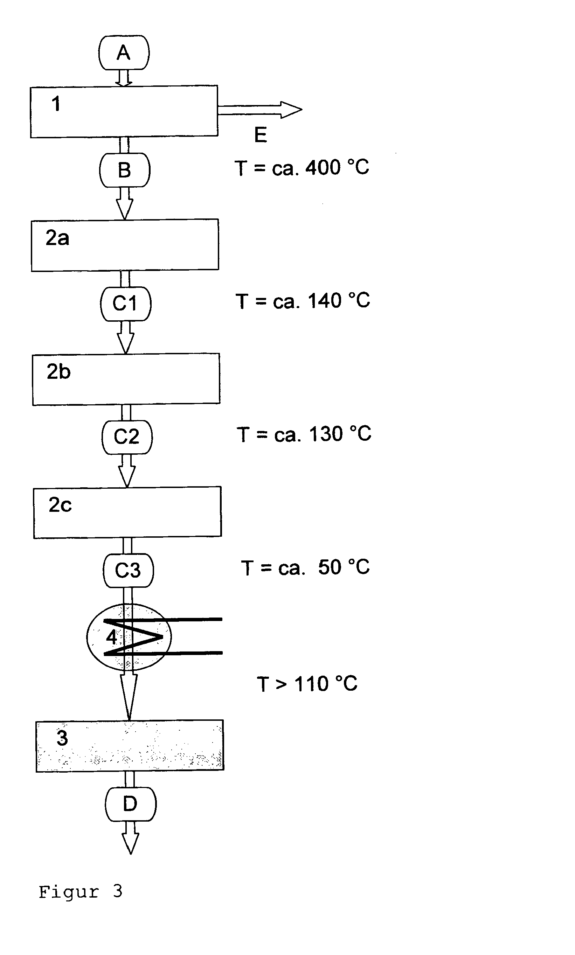

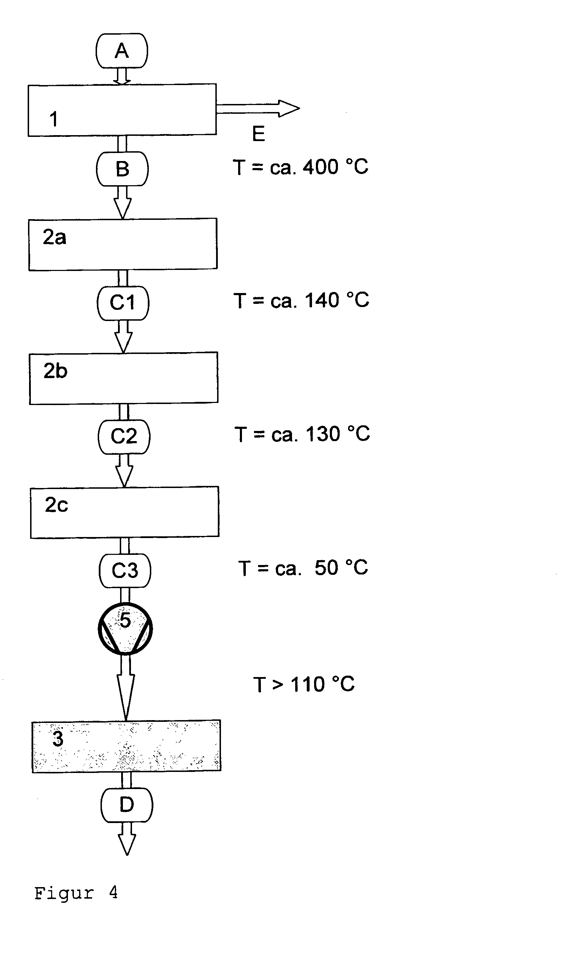

Eine nicht erfindungsgemäβe Verfahrensweise ist in Figur 3 zu sehen. Hier ist die Rauchgas-Entcarbonisierung, ähnlich wie beim Stand der Technik, nach der kompletten Rauchgasreinigung angeordnet, jedoch mit dem Unterschied, dass zur Verhinderung der Kondensation des Wassers aus dem z. B. bei 50 °C nahezu gesättigten Rauchgas dieses zunächst aufgeheizt wird, so dass die Taulinie des Wasserdampfes deutlich überschritten wird. Das Aufheizen kann vorteilhaft über eine Wärmeeinleitung oder einen Wärmetauscher realisiert werden. In diesem Beispiel wird nahezu druckloses Rauchgas auf Temperaturen oberhalb von 110 °C aufgeheizt.

Diese Verfahrensweise bietet sich entweder eigenständig an oder dann, wenn die erfindungsgemäβe Verfahrensweise nicht mehr möglich ist. Dies kann zum Beispiel dann der Fall sein, wenn der Membranwerkstoff bei der Positionierung des Membranmoduls zwischen der Rauchgas-Entstaubung und der Rauchgas-Entschwefelung durch die im entstickten und entstaubten Rauchgas enthaltenen Rest-Stäube und gasförmigen Verunreinigungen irreparabel beschädigt wird.

Um das Blockieren der Membran durch den sich kondensierenden Wasserdampf zu verhindern, wird das zu reinigende CO₂-haltige Rauchgas durch die Wiederaufheizung auf ein höheres Temperaturniveau gebracht, so dass die Taulinie des Wasserdampfes überschritten wird. Hierfür stehen verschiedene Systeme zur Verfügung, z. B. Wärmeeinleitung durch Fremdenergie oder Wärmeaustausch mit dem ungereinigten Rauchgas.

In einer weitere nicht erfindungsgemäβe Verfahrensweise wird die Rauchgas-Entkarbonisierung ebenfalls der Rauchgasreinigung nachgeschalte. Anstelle eines Wärmeeintrags, bzw. eines Wärmetauschers wird hierbei nun eine Druckerhöhung zwischengeschaltet. Die Druckerhöhung des aus der Rauchgasreinigung austretenden Rauchgases wird über einen Verdichter realisiert. Die Verdichtung erfolgt mindestens auf solchen Druck, dass der Taupunkt des dadurch aufgewärmten Wasserdampfes überschritten ist.

Ein weiterer positiver Nebeneffekt dieser Verfahrensweise ist, dass sich der CO₂-Partialdruck im gereinigten Rauchgas im vorliegenden Fall vorteilhaft erhöht, was sich besonders vorteilhaft auf die sich anschließende CO₂-Abtrennung auswirkt.

In dieser Anmeldung zitierte Literatur:
[1] CHAPEL, D. G., MARIZ, C. L. & ERNEST, J. (1999) Recovery of CO2 from Flue Gases: Commercial Trends, Canadian Society of Chemical Engineers Saskatoon, Saskatchewan, Canada.
[2] KOHL, A. L. & NIELSEN, R. B. (1997) Gas Purification, Houston, Gulf Publishing Company.
[3] KOSS, U. (2005) Kraftwerkslinien und Abscheideoptionen - Eine Diskussion der grundlegenden Strategien zur CO2-Abscheidung in CCS-Kraftwerken, IN KUCKSHINRICHS, W., MARKEWITZ, P. & HAKE, J.-F. (Eds.) CO2-Abscheidung und -Speicherung: Eine Zukunftsoption für die deutsche Klimaschutzstrategie? , Jülich, Forschungszentrum Jülich GmbH, Systemforschung und Technologische Entwicklung.
[4] MEULENBERG, W. A., VAN DER DANK, G. J. W., RIENSCHE, E. & BLUM, L. (2005) CO2-Abscheidung mit keramischen Membranen und konkurrierenden Verfahren, IN KUCKSHINRICHS, W., MARKEWITZ, P. & HAKE, J.-F. (Eds.) CO2-Abscheidung und -Speicherung: Eine Zukunftsoption für die deutsche Klimaschutzstrategie? , Jülich, Forschungszentrum Jülich GmbH, Systemforschung und Technologische Entwicklung.
[5] NAZARKO, J., KUCKSHINRICHS, W., SCHREIBER, A. & ZAPP, P. (2006) Umweltauswirkungen von CO2-Abtrennung und -Speicherung als Komponente einer ganzheitlichen Technikbewertung, IN TECHNISCHE UNIVERSITÄT GRAZ - INSTITUT FÜR ELEKTRIZITÄTSWIRT-SCHAFT UND ENERGIEINNOVATION (Ed.) 9. Symposium Energieinnovation "Dritte Energiepreiskrise - Anforderungen an die Energieinnovation", Graz, Österreich, TU Graz.
[6] NAZARKO, J., SCHREIBER, A., KUCKSHINRICHS, W. & ZAPP, P. (2007) Environmental Analysis of the Coal-based Power Production with Amine-based Carbon Capture, IN RISØ NATIONAL LABORATORY (Ed.) Riss∅ International Energy Conference 2007 "Energy solutions for sustainable development", Risø, Denmark, Risø National Laboratory.
[7] OHLE, A., MOLLEKOPF, N., BURCHHARDT, U. & SNELL, A. (2004) Vergleich verschiedener Verfahren zur CO2-Abscheidung aus Rauch- und Synthesegasen. XXXVI. Kraftwerkstechnisches Kolloquium - Entwicklungspotentiale für Kraftwerke mit fossilen Brennstoffen, Dresden, Technische Universität Dresden, Institut für Energietechnik, Lehrstuhl für Kraftwerkstechnik.
[8] RAO, A. B., RUBIN, E. S. & BERKENPAS, M. B. (2004) An integrated modeling framework für carbon management technologies. Volume 1 - Technical Dokumentation: Amine-Based CO2 Capture and Storage Systems for Fossil Fuel Power Plant Pittsburgh, Carnegie Mellon Univesity, Center für Energy and Envionmental Studies / Depatment of Engineering and Public Policy.
[9] RÖDER, A., BAUER, C. & R., D. (2004) Kohle, IN DONES, R. (Ed.) Sachbilanzen von Energiesystemen: Grundlagen für den ökologischen Vergleich von Energiesystemen und den Einbezug von Energiesystemen in Ökobilanzen für die Schweiz, Dübendorf, Paul Scherrer Institut Villigen, Swiss Centre for Life Cycle Inventories.
[10] SMEISER, S. C., STOCK, R. M., MCCLEARY, G. J., BOORAS, G. S. & STUART, R. J. (1991) Engineering and Economic Evaluation of CO2 Removal from Fossil-Fuel-Fired Power Plants.
[11] JP 06 099 035 A

## Patentansprüche

1. Verfahren zur Abtrennung von Kohlendioxid aus einem Rauchgas mit Hilfe einer Membran, wobei das Rauchgas einer Rauchgasreinigung unterzogen wird, und das Rauchgas vor Eintritt in das Membranmodul eine derartige Temperatur aufweist, dass es nicht mit Wasserdampf gesättigt ist **dadurch gekennzeichnet dass** eine Entschwefelung des Rauchgases vorgesehen ist und
dass die Abtrennung des Kohlendioxids aus dem Rauchgas vor dem Prozessschritt der Entschwefelung des Rauchgases erfolgt,

2. Verfahren nach Anspruch 1, bei dem die Abtrennung des Kohlendioxids nach dem Prozessschritt einer Entstickung oder Entstaubung des Rauchgases erfolgt.

3. Verfahren nach einem der Ansprüche 1 bis 2, bei dem das Rauchgas vor Eintritt in das Membranmodul Temperaturen oberhalb von 110 °C aufweist.

4. Vorrichtung zur Abtrennung von Kohlendioxid aus einem Rauchgas, umfassend ein Mittel zum Entschwefeln eines Rauchgases sowie ein Membranmodul mit einer Membran zur CO₂-Abtrennung, **dadurch gekennzeichnet, dass** das Membranmodul strömungstechnisch vor dem Mittel zum Entschwefeln des Rauchgases angeordnet ist.

5. Vorrichtung nach Anspruch 4, umfassend ein Mittel zur Entstickung oder Entstaubung des Rauchgases, wobei dass das Membranmodul strömungstechnisch nach dem Mittel Entstickung oder Entstaubung des Rauchgases angeordnet ist.

## Claims

1. Process for separating carbon dioxide from flue gas by means of a membrane, where the flue gas is subjected to purification treatment and before entering the membrane module is at a temperature such that it is not saturated with water vapour, **characterized in that** desulphurization of the flue gas is provided, and the separation of carbon dioxide from the flue gas takes place before the process-step of desulphurization of the flue gas.

2. Process according to Claim 1 wherein the separation of the carbon dioxide takes place after the process-step of removal of NOx or particulates from the flue gas.

3. Process according to either of Claims 1 and 2 wherein the flue gas is at temperatures above 110°C before entering the membrane module.

4. Apparatus for separating carbon dioxide from flue gas, comprising a means for desulphurizing flue gas and a membrane module with a membrane for C02 separation, **characterized in that** the membrane module is located upstream of the means for desulphurizing the flue gas.

5. Apparatus according to Claim 4, comprising a means for removing NOx or particulates from the flue gas, wherein the membrane module is located downstream of the means for removing NOx or particulates from the flue gas.

## Revendications

1. Procédé servant à séparer du dioxyde de carbone d'un gaz de fumée à l'aide d'une membrane, sachant que le gaz de fumée est soumis à une épuration de gaz de fumée et que le gaz de fumée présente, avant d'entrer dans le module à membrane, une température telle qu'il n'est pas saturé en vapeur d'eau, **caractérisé en ce qu'**est prévue une désulfuration du gaz de fumée, et
**en ce que** la séparation du dioxyde de carbone du gaz de fumée est effectuée avant l'étape de processus consistant à désulfurer le gaz de fumée.

2. Procédé selon la revendication 1, dans le cadre duquel la séparation du dioxyde de carbone est effectuée après l'étape de processus consistant à filtrer et à dépoussiérer le gaz de fumée.

3. Procédé selon l'une quelconque des revendications 1 à 2, dans le cadre duquel le gaz de fumée présente, avant d'entrer dans le module à membrane, des températures supérieures à 110° C.

4. Dispositif servant à séparer du dioxyde de carbone d'un gaz de fumée,
comprenant un moyen servant à désulfurer un gaz de fumée ainsi qu'un module à membrane doté d'une membrane de séparation du CO₂, **caractérisé en ce que** le module à membrane est disposé selon la technique des fluides en amont du moyen servant à désulfurer le gaz de fumée.

5. Dispositif selon la revendication 4, comprenant un moyen servant à filtrer ou à dépoussiérer le gaz de fumée, sachant que le module à membrane est disposé selon la technique des fluides en aval du moyen servant à filtrer ou à dépoussiérer le gaz de fumée.
